# EUROPEAN PATENT SPECIFICATION

(11) **EP 1 562 877 B1**
(45) Date of publication and mention of the grant of the patent: **09.12.2009**
(21) Application number: 03753823.8
(22) Date of filing: 20.10.2003
(51) Int. Cl.: C04B 38/06, C04B 35/622, G01N 27/49, G01N 27/407

(54) **SENSORS**
SENSOREN
DETECTEURS

(30) Priority: 18.10.2002 GB 0224267
(43) Date of publication of application: 17.08.2005
(73) Proprietor: Sensox Limited, Middlesex EN3 7XU (GB)
(72) Inventor: GOPAUL, Deepak Jawahurlall, Southgate, London N14 7DD (GB); MASKELL, William Charles, Ealing, London W13 0EG (GB)
(74) Representative: Milhench, Mark Lorne
(86) International application number: PCT/GB2003/004518
(87) International publication number: WO 2004/035504

(56) References cited:
- US-A- 5 499 158
- US-A- 5 774 779
- US-B1- 6 231 707

## Description

This invention relates to a method for making oxygen sensors based upon oxygen-ion-conducting ceramics including hafnia, zirconia and ceria.

The abbreviation OIC is used here for oxygen-ion conductor. The preferred type of OIC is zirconia which may be of the crystalline forms tetragonal, partially-stabilized or cubic. The preferred crystalline type is cubic. Zirconia is the generic term for zirconium dioxide (four-valent) the crystal structure of which has been stabilized with any of various three-or two-valent oxides such as yttria, erbia, gadolinia, calcia, magnesia and others; the preferred stabilizer is yttria. The sensors are normally referred to as zirconia sensors, although here this includes sensors based upon the other 4-valent oxides used in OICs. Zirconia sensors are used for the detection of oxygen, carbon dioxide, water vapor, etc.

Zirconia is an oxygen-ion conductor at elevated temperatures (> 300°C) and its conductivity increases as the temperature is raised. Thus, by applying porous electronically-conducting electrodes, such as platinum, to the two surfaces of a disc of zirconia and imposing a voltage between the electrodes, a current flows and oxygen is electrochemically pumped through the zirconia (amperometric mode); or, if the disc is in contact with gases having different oxygen partial pressures at each electrode then the system is a concentration cell and a Nernst EMF is generated between the two electrodes (potentiometric mode).

Amperometric (two-electrode) zirconia sensors are solid state electrochemical devices that have been developed and used principally for measuring oxygen in gas mixtures. Work has been reported where use has been extended to include measurement of water vapor or carbon dioxide. Adding a further pair of electrodes to the sensor enables it to be operated as a pump-gauge device which can still be used in the amperometric mode while providing additional information for analytical purposes via the gauge.

Amperometric zirconia sensors normally have a single enclosed internal volume and hence may be termed single-chamber devices. Some zirconia sensors have two enclosed internal volumes which may or may not be connected to each other and to the external environment via a hole or holes and may be termed double-chamber devices. The inclusion of the second chamber confers additional benefits and this invention encompasses sensors with one, two or more chambers.

Thick-film amperometric oxygen sensors have been constructed using an ink prepared from a powder of yttria-stabilized zirconia; the construction consists of layers of electrode (cathode), zirconia, electrode (anode) printed onto a substrate. The zirconia performs the dual role of diffusion barrier (by virtue of its porosity) and electrolyte. These sensors display characteristics typical of an amperometric sensor. Preparation techniques for the sensor involve high temperatures, e. g. of the order of 1450°C and elevated operating temperatures, e. g. of the order of 700°C.

One type of zirconia sensor comprises a hollow cylinder closed at both ends, one end of which comprises a disc of zirconia, which disc has gas permeable electrodes on either side. The cylinder has a diffusion hole or holes formed within the structure connecting the inner volume of the hollow cylinder with the surrounding gas. In use the sensor is heated and a potential difference, with appropriate polarity, is applied across the disc via one pair of the electrodes. When a gas containing oxygen enters through the diffusion hole (s) the current flowing is a measure of the oxygen concentration in the gas surrounding the sensor.

Hitherto the sensor has been made by forming the sensor from a green (i. e. unfired) zirconia ceramic (formed from an intimate mixture of zirconia powder with a binder), for example by assembling discs and rings of the green zirconia ceramic to form the desired shape, inserting wires of e. g. platinum, to form electrical connections to the electrodes, printing, painting or otherwise applying the electrodes onto the green zirconia ceramic, inserting and then removing a metal wire in the green zirconia ceramic to form the diffusion hole and firing the structure. The hole formed is adversely affected both by the pulling out of the wire and by the subsequent relaxation of the material surrounding the hole, which can result in an imprecise and not well-defined hole. This affects the accuracy and repeatability of the results from sensor to sensor.

US Patent No. 5499158 discloses a monolithic capacitive pressure transducer and a method for the manufacture thereof, which method includes the use of fugitive organic spacers.

US Patent No. 5774779 discloses a method for making multi-channel structures from composite rods having an outer shell and an inner core. The method involves assembling a plurality of such rods in a bundle, extruding the bundle to reduce its diameter and heating the bundle to remove the inner core from each rod.

US Patent No. 6231707 is concerned with the formation of multilayer ceramic structures, and discloses that holes punched in green sheets of ceramic material may subsequently be filled during firing to avoid collapse of the holes.

European Patent Application No. 0432649 discloses a method and device for sensing nitrous oxide, the device comprising two partially enclosed chambers into and out of which gas containing nitrous oxide can diffuse through the two small orifices. Two platinum electrodes are screen printed on a partition wall which separates the two chambers, and a constant DC voltage is applied to the electrodes by a power source to enable the detection and measurement of nitrous gas concentration.

We have now devised an improved method of forming the diffusion hole or holes which also enables holes with simple or complex geometries to be engineered.

According to one embodiment of the invention there is provided a method of forming at least one diffusion hole in a ceramic structure that forms at least part of a cylindrical structure of a sensor, which method is defined in Claim 1. According to another embodiment of the invention there is provided a method of forming one or more diffusion holes in a ceramic structure that forms at least part of a cylindrical structure of a sensor, which method is defined in Claim 2.

The OIC is preferably hafnia, zirconia or ceria.

For sensors, where the organic element is a fiber or fibers of uniform circular cross- section, the diameter of the hole (s) after firing is preferably greater than 10 microns and more preferably in the range 25 to 200 microns and the size of the fiber(s) chosen accordingly. For zirconia ceramics there is normally a linear size reduction of about 20% on firing and this is allowed for in the dimensions of the green ceramic and fiber(s) or other organic elements used. The fiber can be destroyed by one or more of vaporization, carbonization, combustion or any other process which destroys and so removes the organic fiber.

The green ceramic can be formed by conventional methods, such as by forming an intimate mixture of zirconia powder with a binder such as a polymer and a solvent for the polymer and forming into a sheet or tape. Preferably the polymer is water-soluble or water-swellable and the solvent is water. Discs and rings of this material are readily punched out from such a tape using simple steel tools. The green structure can be fired in a conventional furnace to form a hard ceramic material and temperatures over1000°C, e. g.1450°C, are typically used. During the process of heating up to this temperature, the binder and the organic fiber are vaporized or otherwise destroyed.

The invention may be used to make a sensor which comprises a hollow cylinder with at least part of one end being formed of a disc of an oxygen-ion conducting ceramic such as zirconia, which disc has gas permeable electrodes on either side of it, and the cylinder, including any end caps, has at least part of its structure formed of a ceramic with at least one diffusion hole formed through it by the method described above, the diffusion hole connecting the inner volume of the hollow cylinder with the surrounding atmosphere. Preferably the cylinder is formed of an oxygen-ion conducting ceramic such as zirconia, i.e. the walls and ends of the cylinder are formed of an oxygen-ion conducting ceramic such as zirconia with a diffusion hole through an end or side of the cylinder. The disc of an oxygen-ion conducting ceramic can be of any shape, e. g. circular, rectangular, square, elliptical etc. The cylinder will normally have a circular cross section, but the cross section can be of any shape, e. g. rectangular, square, elliptical etc.

At least an electrode on the inside of the cylinder is porous so that oxygen can diffuse through the electrode to the three phase boundary, electrode-gas- electrolyte (where the electrolyte is an OIC such as for example zirconia). Preferably the electrode is made of a porous platinum or a porous platinum-cermet where the ceramic in the cermet preferably has the same composition as that used for the electrolyte.

A heater element may be used to raise the temperature of the sensor to the desired operating temperature, e. g. of the order of 350-800°C. The heater element can be in the form of resistance wires in contact with, embedded in or adjacent to the oxygen sensor and an electric current can be fed to the heater element by means of platinum or other metal wires. Preferably, the heater element is in the form of a metal layer or layers on the surface of a substrate or substrates and an electric current can be fed to the heater element by means of platinum or other metal wires.

A preferred structure is for the heater element to be in the form of a circular or square disc, which may be made of alumina, onto which is applied a metal film to carry the electrical current, in contact with, or adjacent to the oxygen sensor; more preferably there can be two heater elements, one on either side of the oxygen sensor to form a sandwich construction and this arrangement then provides more uniform heating of the sensor. A preferred metal for the metal film is platinum and a preferred process for applying the metal film to the substrate is screen-printing. The heater elements can be connected in series or parallel; if they are in parallel there is still heating if one heater element should fail.

In use, the current flowing between the electrodes can be monitored and this used as a measure of oxygen concentration. Alternatively a constant current can be passed through the disc and the voltage monitored or the electrodes on the disc are on open- circuit and a voltage measured between said electrodes.

Preferred embodiments of the invention are illustrated in the drawings, in which:-
Fig. 1 shows a cross section of an oxygen sensor; and
Fig. 2 shows a cross section of an assembled sensor.

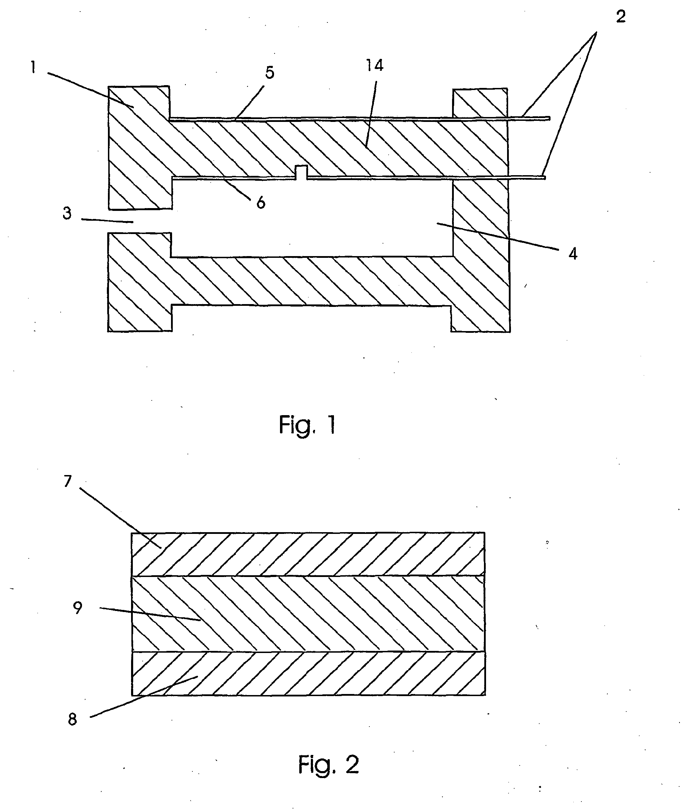

Referring to fig.1 the sensor is formed of a fired zirconia ceramic cylinder (1) which has an internal cavity (4), and a diffusion hole (3) formed in it. There are platinum electrodes (5) and (6) either side of the end (14) of the zirconia cylinder (1). The platinum electrodes are connected to wires (2).

The sensor was formed from a green yttria-stabilized cubic zirconia with a water-soluble or water-swellable binder and water; there was an organic fiber passing through one end/side. The structure was fired at 1450°C and the organic fiber and the binder were destroyed by the high temperature, the zirconia powder sintered and the structure of fig.1 formed. Platinum wires (2) which contact electrodes on the sensor were included as in conventional sensors. There is an electrical heater element (shown in fig. 2) which heats up the sensor to operating temperature.

In use, a potential difference of appropriate polarity is applied between wires (2) and, when a gas containing oxygen diffuses through the hole (3), the current flowing between the wires (2) is a measure of the oxygen concentration.

Referring to fig. 2 the assembled sensor comprises a sensor (9) as in fig. 1 on either side of which are heater elements (7) and (8).

## Claims

1. A method of forming at least one diffusion hole (3) in a ceramic structure that forms at least part of a cylindrical structure (1) of a sensor, the cylindrical structure (1) being hollow with end caps that enclose an internal volume (4), one end of the cylindrical structure being a sensor element (9) that comprises a disc of oxygen-ion-conducting ceramic which has a porous electrode (6) positioned at least on its internal surface, there being an electrical heating element (7, 8) for heating the disc of oxygen-ion-conducting ceramic,
which method comprises:
(i) forming said ceramic structure from a green ceramic that comprises an intimate mixture of a powder of the ceramic and a binder, which ceramic structure incorporates at least one organic fibre or other organic element passing from one side of the ceramic structure to said internal volume (4) in a straight or non-straight path, and
(ii) firing the green ceramic structure at an elevated temperature to cure the ceramic and to destroy the binder and the organic fibre or other organic element thereby forming said diffusion hole.

2. A method of forming one or more diffusion holes (3) in a ceramic structure that forms at least part of a cylindrical structure (1) of a sensor, the cylindrical structure (1) being hollow with end and intermediate caps enclosing at least two internal volumes, one end of the cylindrical structure being a sensor element (9) comprising a disc of oxygen-ion-conducting ceramic having a porous electrode (6) positioned on each surface, there being an electrical heating element (7, 8) for heating the disc of oxygen-ion-conducting ceramic
which method comprises:
(i) forming said ceramic structure from a green ceramic that comprises an intimate mixture of a powder of the ceramic and a binder, which ceramic structure incorporates at least one organic fibre or other organic element passing from one side of the ceramic structure to a said internal volume in a straight or non-straight path, and
(ii) firing the green ceramic structure at an elevated temperature to cure the ceramic and to destroy the binder and the organic fibre or other organic element thereby forming said diffusion holes (3).

3. A method according to Claim 1 or 2 in which the organic fibre or other organic element has a uniform or non-uniform cross-section.

4. A method according to any of Claims 1 to 3, wherein the binder is a water-soluble or water-swellable polymer.

5. A method according to any preceding claim, wherein a fibre is incorporated into said ceramic structure and the diameter of the diffusion hole after firing is greater than 10 microns.

6. A method according to any preceding claim, wherein a fibre is incorporated into said ceramic structure and the diameter of the diffusion hole after firing is in the range 25 to 200 microns.

7. A method according to any preceding claim, wherein step (ii) comprises firing the green ceramic at a temperature in excess of 1000°C.

8. A method according to any preceding claim, wherein the oxygen-ion-conductor is a 4-valent metal oxide stabilised with a 3- or 2-valent metal oxide.

9. A method according to Claim 8, wherein the 4-valent metal oxide is zirconium dioxide, cerium dioxide or hafnium dioxide.

10. A method according to Claim 8 and 9, wherein the oxygen-ion-conductor comprises zirconium dioxide stabilised with yttria.

11. A method according to any preceding claim, wherein the oxygen-ion-conductor has a cubic crystalline form.

12. A method according to any preceding claim, wherein the cylindrical structure (1) has a circular, rectangular, square or elliptical cross-section.

13. A method according to any preceding claim, wherein said electrode is made of porous platinum or a porous platinum/oxygen-ion-conductor cermet.

14. A method according to Claim 13, wherein said porous electrode (6) is of a porous platinum/oxygen-ion-conductor cermet in which the oxygen-ion-conductor of said cermet is of the same composition as that used in a green ceramic to form an electrolyte of the sensor element (9).

15. A method according to any preceding claim, wherein the cylindrical structure (1) is formed of an oxygen-ion-conducting ceramic with said diffusion hole through an end or side of the cylinder.

## Patentansprüche

1. Verfahren zur Herstellung mindestens eines Streuloches (3) in einer Keramikstruktur, die mindestens einen Teil einer Zylinderstruktur (1) eines Sensors bildet, wobei die Zylinderstruktur (1) eine Aushöhlung mit Endkappen ist, die ein Innenvolumen (4) einschließen, wobei ein Ende der Zylinderstruktur ein Sensorelement (9) ist, das eine Sauerstoffionen leitende Keramikscheibe umfasst, die eine poröse Elektrode (6) besitzt, die mindestens auf ihrer Innenseite, wo sich ein elektrisches Heizelement (7, 8) zur Heizung der Sauerstoffionen leitende Keramikscheibe befindet positioniert ist, wobei dieses Verfahren folgende Schritte umfasst:
(i) die Bildung der genannten Keramikstruktur aus einer Grünkeramik, welche eine intensive Mischung eines Keramikpulvers der Keramik und eines Bindemittels umfasst, in welcher Keramikstruktur mindestens eine organische Faser oder ein sonstiges organisches Element eingearbeitet ist, das von einer Seite der Keramikstruktur auf geradlinigem oder nicht geradlinigem Wege zum genannten Innenvolumen (4) übergeht, und
(ii) das Hochtemperatur-Hartbrennen der grünen Keramikstruktur, zur Keramikbehandlung und zum Ausbrennen des Bindemittels und der organischen Faser oder des sonstigen organischen Elements, durch Bildung dabei des genannten Streuloches.

2. Verfahren zur Herstellung eines oder mehrerer Streulöcher (3) in einer Keramikstruktur, die mindestens einen Teil einer Zylinderstruktur (1) eines Sensors bildet, wobei die Zylinderstruktur (1) eine Aushöhlung mit Endkappen ist, die mindestens zwei Innenvolumen (4) einschließen, wobei ein Ende der Zylinderstruktur ein Sensorelement (9) ist, das eine Sauerstoffionen leitende Keramikscheibe umfasst, die eine poröse Elektrode (6) besitzt, die auf jeder der Flächen, wo sich ein elektrisches Heizelement (7, 8) zur Heizung der Sauerstoffionen leitende Keramikscheibe befindet positioniert ist,
wobei dieses Verfahren folgende Schritte umfasst:
(i) die Bildung der genannten Keramikstruktur aus einer Grünkeramik, welche eine intensive Mischung eines Keramikpulvers der Keramik und eines Bindemittels umfasst, in welcher Keramikstruktur mindestens eine organische Faser oder ein sonstiges organisches Element eingearbeitet ist, das von einer Seite der Keramikstruktur auf geradlinigem oder nicht geradlinigem Wege zum genannten Innenvolumen (4) übergeht, und
(ii) das Hochtemperatur-Hartbrennen der grünen Keramikstruktur, zur Keramikbehandlung und zum Ausbrennen des Bindemittels und der organischen Faser oder des sonstigen organischen Elements, durch Bildung dabei des genannten Streuloches (3).

3. Verfahren nach Anspruch 1 oder 2, bei welchem die organische Faser oder das andere organische Element einen gleichmäßigen oder nicht gleichmäßigen Querschnitt aufweisen.

4. Verfahren nach Anspruch 1 bis 3, bei welchem das Bindemittel ein wasserlösliches oder wasserquellendes Polymer ist.

5. Verfahren nach einem der vorangehenden Ansprüche, bei welchem eine Faser in der genannten Keramikstruktur eingearbeitet ist und der Durchmesser des Streuloches nach Durchbrennen größer als 10 Mikrometer ist.

6. Verfahren nach einem der vorangehenden Ansprüche, bei welchem eine Faser in der genannten Keramikstruktur eingearbeitet ist und der Durchmesser des Streuloches nach Hartbrennen im Bereich von 25 bis 200 Mikrometer liegt.

7. Verfahren nach einem der vorangehenden Ansprüche, bei welchem Schritt (ii) das Durchbrennen der Grünkeramik bei einer von 1000°C übermäßigen Temperatur umfasst.

8. Verfahren nach einem der vorangehenden Ansprüche, bei welchem der Sauerstoff-Ionenleiter ein durch ein dreiwertiges oder zweiwertiges Metalloxid stabilisiertes vierwertiges Metalloxid ist.

9. Verfahren nach Anspruch 8, bei welchem das vierwertige Metalloxid Zirkoniumdioxid, Cerdioxid oder Hafniumdioxid ist.

10. Verfahren nach Anspruch 8 und Anspruch 9, bei welchem der Sauerstoff-Ionenleiter das durch Yttriumoxid stabilisierte Zirkoniumdioxid umfasst.

11. Verfahren nach einem der vorangehenden Ansprüche, bei welchen der Sauerstoff-Ionenleiter eine kubische kristallartige Form hat.

12. Verfahren nach einem der vorangehenden Ansprüche, bei welchem die Zylinderstruktur (1) einen kreisrunden, rechteckigen, viereckigen oder elliptischen Querschnitt hat.

13. Verfahren nach einem der vorangehenden Ansprüche, bei welchem die genannte Elektrode aus porösem Platin oder aus einem Cermet aus porösem Platin und Sauerstoff-Ionenleiter besteht.

14. Verfahren nach Anspruch 13, bei welchem die genannte poröse Elektrode (6) ein Cermet aus porösem Platin und Sauerstoff-Ionenleiter ist, in welchem der Sauerstoff-Ionenleiter des genannten Cermets von gleicher Zusammensetzung ist als die in einer Grünkeramik eingesetzte, um ein Elektrolyt des Sensorelements (9) zu bilden.

15. Verfahren nach einem der vorangehenden Ansprüche, bei welchem die Zylinderstruktur (1) aus einer Sauerstoffionen leitenden Keramik gebildet ist, mit dem genannten Streuloch durchgehend in einem Ende oder einer Seite des Zylinders.

## Revendications

1. Procédé de formation d'au moins un trou de diffusion (3) dans une structure céramique qui forme au moins une partie d'une structure cylindrique (1) d'un capteur, la structure cylindrique (1) étant un creux avec des coiffes d'extrémité qui enferment un volume interne (4), une extrémité de la structure cylindrique étant un élément capteur (9) qui comprend un disque en céramique conducteur d'ions oxygène qui a une électrode poreuse (6) positionnée au moins sur sa face interne, là étant un élément de chauffage électrique (7, 8) pour chauffer le disque en céramique conducteur d'ions oxygène,
lequel procédé comprend
(i) la formation de ladite structure céramique à partir d'une céramique verte qui comprend un mélange intime d'une poudre de la céramique et d'un liant, laquelle structure en céramique incorpore au moins une fibre organique ou un autre élément organique passant depuis un côté de la structure céramique audit volume interne (4) dans un chemin rectiligne ou non rectiligne, et
(ii) la cuisson de la structure en céramique verte à une température élevée pour traiter la céramique et pour détruire le liant et la fibre organique ou autre élément organique en formant de ce fait ledit trou de diffusion.

2. Procédé de formation d'un ou plusieurs trous de diffusion (3) dans une structure céramique qui forme au moins une partie d'une structure cylindrique (1) d'un capteur, la structure cylindrique (1) étant un creux avec des coiffes d'extrémité et intermédiaires qui enferment au moins deux volumes internes, une extrémité de la structure cylindrique étant un élément de capteur (9) qui comprend un disque en céramique conducteur d'ions oxygène qui a une électrode poreuse (6) positionnée sur chaque surface, là étant un élément de chauffage électrique (7, 8) pour chauffer le disque en céramique conducteur d'ions oxygène,
lequel procédé comprend :
(i) la formation de ladite structure en céramique à partir d'une céramique verte qui comprend un mélange intime d'une poudre de la céramique et d'un liant, laquelle structure en céramique incorpore au moins une fibre organique ou un autre élément organique passant d'un côté de la structure céramique audit volume interne dans un chemin rectiligne ou non rectiligne, et
(ii) la cuisson de la structure en céramique grise à une température élevée pour traiter la céramique et pour détruire le liant et la fibre organique ou autre élément organique en formant de ce fait ledit trou de diffusion (3).

3. Procédé selon la revendication 1 ou 2 dans lequel la fibre organique ou autre élément organique a une section transversale uniforme ou non uniforme.

4. Procédé selon la revendication 1 à 3, dans lequel le liant est un polymère soluble dans l'eau ou capable de gonfler dans l'eau.

5. Procédé selon l'une quelconque des revendications précédentes, dans lequel une fibre est incorporée dans ladite structure en céramique et le diamètre du trou de diffusion après brûlage est supérieur à 10 microns.

6. Procédé selon l'une quelconque des revendications précédentes, dans lequel une fibre est incorporée dans ladite structure en céramique et le diamètre du trou de diffusion après cuisson est dans la fourchette de 25 à 200 microns.

7. Procédé selon l'une quelconque des revendications précédentes, dans lequel l'étape (ii) comprend le brûlage de la céramique verte à une température en excès de 1000°C.

8. Procédé selon l'une quelconque des revendications précédentes, dans lequel le conducteur d'ions oxygène est un oxyde de métal tétravalent stabilisé avec un oxyde métallique trivalent ou bivalent.

9. Procédé selon la revendication 8, dans lequel l'oxyde de métal tétravalent est le dioxyde de zirconium, le dioxyde de cérium ou le dioxyde d'hafnium.

10. Procédé selon la revendication 8 et la revendication 9, dans lequel le conducteur d'ions oxygène comprend le dioxyde de zirconium stabilisé avec l'oxyde d'yttrium.

11. Procédé selon l'une quelconque des revendications précédentes, dans lequel le conducteur d'ions oxygène a une forme cristalline cubique.

12. Procédé selon l'une quelconque des revendications précédentes, dans lequel la structure cylindrique
(1) a une section transversale circulaire, rectangulaire, carrée ou elliptique.

13. Procédé selon l'une quelconque des revendications précédentes, dans lequel ladite électrode est faite de platine poreux ou d'un cermet de platine poreux et de conducteur d'ions oxygène.

14. Procédé selon la revendication 13, dans lequel ladite électrode poreuse (6) est un cermet de platine poreux et de conducteur d'ions oxygène dans lequel le conducteur d'ions oxygène dudit cermet est de la même composition que celle utilisée dans une céramique verte pour former un électrolyte de l'élément capteur (9).

15. Procédé selon l'une quelconque des revendications précédentes, dans lequel la structure cylindrique
(1) est formée d'une céramique conductrice d'ions oxygène avec ledit trou de diffusion à travers une extrémité ou un côté du cylindre.
